# EUROPEAN PATENT APPLICATION

(11) **EP 4 836 052 A1**
(43) Date of publication of application: **04.11.2026**
(21) Application number: 25855535.8
(22) Date of filing: 18.02.2025
(51) Int. Cl.: H01M 10/0525, H01M 4/62, H01M 4/58

(54) **BATTERY CELL, BATTERY APPARATUS, AND ELECTRIC DEVICE**

(30) Priority: 22.08.2024 CN 202411162604
(71) Applicant: Contemporary Amperex Technology Co., Limited, Ningde, Fujian 352100 (CN)
(72) Inventor: JING, Erdong, Ningde, Fujian 352100 (CN); LIU, Huanji, Ningde, Fujian 352100 (CN); XIE, Haotian, Ningde, Fujian 352100 (CN); CHEN, Xiao, Ningde, Fujian 352100 (CN); ZHANG, Nannan, Ningde, Fujian 352100 (CN); HE, Yong, Ningde, Fujian 352100 (CN); SUN, Hongliang, Ningde, Fujian 352100 (CN)
(74) Representative: Aera A/S
(86) International application number: PCT/CN2025/077898
(87) International publication number: WO 2026/040355

(57) **Abstract**

The battery cell (5) comprises a positive electrode sheet, a negative electrode sheet, and a separator; the positive electrode sheet comprises a positive electrode current collector and a positive electrode film layer located on at least one side of the positive electrode current collector, and the positive electrode film layer comprises a lithium iron phosphate material and a pre-lithiation agent; and the separator is located between the positive electrode sheet and the negative electrode sheet. When the battery cell (5) is discharged to 2.5 V at a rate of 0.04 C, the lithium content is 4.0%-4.3% based on the total mass of the positive electrode film layer, thereby resulting in a battery cell (5) having both good cycle performance and energy density.

## Description

### TECHNICAL FIELD

The present application relates to the technical field of batteries, and in particular, to a battery cell, a battery apparatus, and an electric device.

### BACKGROUND

Traction batteries are used not only in energy storage power systems such as hydropower, thermal power, wind power, and solar power plants, but also in electric tools such as electric bicycles, electric motorcycles, and electric vehicles, as well as military equipment, aerospace, and many other fields. High safety and long service life are the two core demands for energy storage batteries. The battery cells involved in related art suffer from rapid capacity attenuation in the early stage, failing to meet customers' increasingly stringent requirements on service life.

### SUMMARY

A first aspect of the present application provides a battery cell, where the battery cell includes a positive electrode sheet, where the positive electrode sheet includes a positive electrode current collector and a positive electrode film layer located on at least one side of the positive electrode current collector, the positive electrode film layer includes a lithium iron phosphate material and a pre-lithiation agent, and when the battery cell is discharged to 2.5 V at a rate of 0.04C, based on a total mass of the positive electrode film layer, a content of lithium is 4.0% to 4.3%; a negative electrode sheet, where the negative electrode sheet includes a negative electrode current collector and a negative electrode film layer located on at least one side of the negative electrode current collector, the negative electrode film layer comprises a negative electrode active material, and the negative electrode active material comprises graphite; and a separator, where the separator is located between the positive electrode sheet and the negative electrode sheet. Therefore, a battery cell having both good cycle performance and energy density is obtained.

According to some embodiments of the present application, when the battery cell is discharged to 2.5 V at a rate of 0.04C, based on the total mass of the positive electrode film layer, the content of lithium is 4.0% to 4.2%. Therefore, the energy density of the battery cell is improved while the cycle performance of the battery cell is improved.

According to some embodiments of the present application, when the battery cell is discharged to 2.5 V at a rate of 0.04C, based on the total mass of the positive electrode film layer, the content of lithium is 4.0% to 4.1%. Therefore, the energy density of the battery cell is improved while the cycle performance of the battery cell is improved.

According to some embodiments of this application, on a longitudinal section in a thickness direction of the positive electrode sheet, there is a first gap between the lithium iron phosphate material and the pre-lithiation agent, and the first gap is 50 nm to 500 nm. Therefore, the infiltration effect of the electrolyte solution on the positive electrode sheet is improved, and the dynamics performance of the battery cell is improved.

According to some embodiments of this application, the positive electrode film layer at least includes the pre-lithiation agent and the lithium iron phosphate material below: on the longitudinal section along a thickness direction of the positive electrode sheet, an average value of a longest diameter of the pre-lithiation agent is a, an average value of a longest diameter of the lithium iron phosphate material is b, and a and b satisfy the following relationship: 5 µm≤a-b≤11 µm. Therefore, the particle size of the pre-lithiation agent is increased, and the particle size of the lithium iron phosphate material is reduced, so that side reactions of the pre-lithiation agent are reduced, and the conductivity of the positive electrode active material is improved.

According to some embodiments of the present application, 1 µm≤b≤2 µm, and 7 µm≤a≤12 µm. Therefore, by setting a and b within the above ranges, the conductivity of the positive electrode active material is improved.

According to some embodiments of this application, the pre-lithiation agent comprises a matrix, the matrix includes LiₓN_{y}O_{z}, 1≤x≤6, 1≤y≤6, 2≤z≤12, and N includes one or more of a Na element, a Ni element, a Co element, a Mn element, a Al element, and a Fe element.

According to some embodiments of the present application, the pre-lithiation agent includes a matrix, and the matrix comprises one or two of Li₂NiO₂ and Li₅FeO₄.

According to some embodiments of this application, the pre-lithiation agent includes a matrix, and the matrix includes one or two of LiₙNiOₘ and LiₑFeO_{f}, where 0<m≤2, 0≤n≤2, 0≤e≤5, and 0<f≤4.

According to some embodiments of this application, the pre-lithiation agent includes a matrix, and the matrix includes one or both of NiOₘ and LiₚFeO_{q}, where 0<m≤2, 0≤p≤1, and 0<q≤2.

Therefore, the decomposition of the pre-lithiation agent can compensate for the formation of active lithium ions consumed by an SEI, thereby improving the energy density of the battery cell.

According to some embodiments of the present application, a molar content of the Li element in the pre-lithiation agent is greater than a molar content of the Li element in the lithium iron phosphate material. Therefore, the lithium replenishment effect is improved, and the energy density of the battery cell is improved.

According to some embodiments of the present application, at least part of a surface of the matrix has a coating layer, and the coating layer includes one or more of a C element, a Al element, a Zr element, a P element, an S element, an Si element, and a B element. Therefore, the stability of the pre-lithiation agent is improved, the ionic conductivity of the pre-lithiation agent is improved, and the dynamic performance of the battery cell is improved.

In some embodiments of the present application, a thickness of the second coating layer is 10 nm to 200 nm. Therefore, the stability of the pre-lithiation agent is improved, the ionic conductivity of the pre-lithiation agent is improved, and the dynamic performance of the battery cell is improved.

According to some embodiments of the present application, there is a second gap between the matrix and the coating layer, and the second gap is 5 nm to 50 nm. Therefore, the second gap can be filled with more electrolyte solution, the liquid retention capability of the positive electrode sheet is enhanced, and the internal resistance of the battery cell is reduced.

According to some embodiments of this application, the matrix includes a doping element, and the doping element includes one or more of a Al element, a Mn element, a Ti element, a Ni element, a Si element, a B element, an S element, and a P element. Therefore, the structural stability of the pre-lithiation agent is improved, and side reactions between the pre-lithiation agent and the electrolyte solution are reduced.

According to some embodiments of the present application, based on a total mass of the matrix, a mass proportion of the doping element is 0.01% to 0.2%. Therefore, the structural stability of the pre-lithiation agent is improved, and side reactions between the pre-lithiation agent and the electrolyte solution are reduced.

According to some embodiments of the present application, N includes a Fe element, and a molar ratio of a Fe atom to an O atom in the pre-lithiation agent is 1: (2-2.5). Specifically, the pre-lithiation agent decomposes to release oxygen. With different degrees of decomposition, molar ratios of Fe atoms to O atoms are different, and an explosion-proof valve is opened through the released oxygen, thereby improving the safety of the battery cell.

According to some embodiments of the present application, the positive electrode film layer further includes a conductive agent, and the conductive agent includes one or more of superconducting carbon, acetylene black, carbon black, Ketjen black, a carbon dot, a carbon nanotube, graphene, and a carbon nanofiber. Therefore, the conductivity of the positive electrode sheet is improved.

According to some embodiments of the present application, when the battery cell is charged to 4.5 V at a rate of 0.05C, gas is generated in the battery cell, the gas comprises oxygen, and based on a total mass of the gas, a mass proportion of the oxygen is 30% to 80%. Therefore, the explosion-proof valve can be opened through the released oxygen during overcharging, thereby improving the safety of the battery cell.

In some embodiments of the present application, the battery further includes: an electrolyte solution, where the electrolyte solution includes a solvent, an electrolyte salt, and an additive, a molar concentration of the electrolyte salt in the electrolyte solution is 1.1 mol/L to 1.5 mol/L, the additive includes one or more of a phosphorus-containing additive, a fluorine-containing additive, and a sulfur-containing additive, and the solvent comprises a cyclic carbonate and a linear carbonate. Therefore, the Li consumption in the process of forming the SEI film is reduced, the energy density of the battery cell is improved, the stability of the positive electrode active material and the SEI film is improved, and the cycle performance of the battery cell is improved.

A second aspect of the present application provides a battery apparatus, including the battery cell provided in the first aspect of the present application.

A third aspect of the present application provides an electric device, including the battery cell provided in the first aspect of the present application, where the battery cell is configured to provide electric energy.

Additional aspects and advantages of the present application will be partly provided in the following description, and partly become evident in the following description or understood through the practice of the present application.

### BRIEF DESCRIPTION OF THE DRAWINGS

Various other advantages and benefits will become clear to a person of ordinary skill in the art upon reading the detailed description of the preferred implementations below. The accompanying drawings are used only for the purpose of illustrating the preferred implementations and are not to be construed as limitations on the present application. In addition, the same reference numerals are used to denote the same components throughout the accompanying drawings. In the accompanying drawings:
FIG. 1 is a cross-sectional SEM image of a positive electrode sheet according to an embodiment of the present application.
FIG. 2 is a schematic diagram of a battery cell according to an implementation of the present application.
FIG. 3 is an exploded view of the battery cell according to an implementation of the present application shown in FIG. 2.
FIG. 4 is a schematic diagram of a battery module according to an implementation of the present application.
FIG. 5 is a schematic diagram of a battery pack according to an implementation of the present application.
FIG. 6 is an exploded diagram of the battery pack according to an implementation of the present application shown in FIG. 5.
FIG. 7 is a schematic diagram of an electric device using a battery apparatus as a power supply according to an implementation of the present application.

### Description of reference signs:

1, battery pack; 2, upper box body; 3, lower box body; 4, battery module; 5, battery cell; 51, case; 52, electrode assembly; 53, cover plate; 6, lithium ferric manganese phosphate particle; 71, pre-lithiation agent matrix; 72, pre-lithiation agent coating layer; and 73, second gap.

### DETAILED DESCRIPTION OF PREFERRED EMBODIMENTS

Embodiments of the technical solutions of the present application are described in detail below. The following embodiments are only used to more clearly illustrate the technical solutions of the present application, and thus are used as examples only, and are not intended to limit the protection range of the present application.

Reference to "an embodiment" herein means that a particular feature, structure, or characteristic described with reference to the embodiment can be included in at least one embodiment of the present application. The phrase in various places in the description does not necessarily all refer to the same embodiment, or a separate or alternative embodiment mutually exclusive of other embodiments. It is explicitly and implicitly understood by a person skilled in the art that the embodiments described herein may be combined with other embodiments.

Unless otherwise specified, all implementations and optional implementations of the present application may be combined with each other to form new technical solutions.

Unless otherwise specified, all technical features and optional technical features of the present application can be combined with each other to form new technical solutions.

Unless otherwise specified, all steps in the present application may be performed sequentially or randomly, preferably sequentially. For example, the method includes steps (a) and (b), which indicates that the method may include sequentially performed steps (a) and (b) or may include sequentially performed steps (b) and (a). For example, the mentioned method may further include step (c), which indicates that step (c) may be added to the method in any order, for example, the method may include steps (a), (b), and (c), may include steps (a), (c), and (b), may include steps (c), (a) and (b), or the like.

At present, from the development of the market situation, batteries are more and more widely used and can be applied to energy storage power supply systems such as hydraulic, thermal, wind and solar power stations, but the energy storage batteries in the related art cannot meet the requirements of high energy density and long cycle life at the same time.

The present application is intended to develop a battery cell having both an excellent energy density and cycle performance, and the energy density of the battery cell is improved by disposing a pre-lithiation agent in a positive electrode film layer. By controlling the lithium content in the positive electrode film layer when the battery cell is discharged to 2.5V at a rate of 0.04C, the utilization rate of the positive electrode active material is improved, and the cycle life of the battery cell is prolonged.

The battery disclosed in the embodiments of the present application can be used in an electrical device using a battery cell as a power supply or various energy storage systems using a battery cell as an energy storage element. The electric device may comprise, but is not limited to, a mobile phone, a tablet computer, a notebook computer, an electric toy, an electric tool, a battery-powered vehicle, an electric vehicle, a ship, a spacecraft, and the like. The electric toy may include a stationary or mobile electric toy, such as a game machine, an electric car toy, an electric ship toy, an electric airplane toy, and the like, and the spacecraft may be an airplane, a rocket, a space shuttle, a spaceship, etc.

A first aspect of the present application provides a battery cell, where the battery cell includes a positive electrode sheet, where the positive electrode sheet includes a positive electrode current collector and a positive electrode film layer located on at least one side of the positive electrode current collector, the positive electrode film layer includes a lithium iron phosphate material and a pre-lithiation agent, and when the battery cell is discharged to 2.5 V at a rate of 0.04C, based on a total mass of the positive electrode film layer, a content of lithium is 4.0% to 4.3%; a negative electrode sheet, where the negative electrode sheet includes a negative electrode current collector and a negative electrode film layer located on at least one side of the negative electrode current collector, the negative electrode film layer comprises a negative electrode active material, and the negative electrode active material comprises graphite; and a separator, where the separator is located between the positive electrode sheet and the negative electrode sheet.

The present application is intended to develop a battery cell with both good cycle performance and energy density, to compensate for, by disposing a pre-lithiation agent in a positive electrode film layer, lithium consumption caused by formation of an SEI film in a formation stage, thereby improving the energy density of the battery cell. By controlling the lithium content in the positive electrode film layer when the battery cell is discharged to 2.5V at a rate of 0.04C to be within an appropriate range, the number of lithium ions in the positive electrode film layer is increased, the gram capacity of the positive electrode active material is increased, and the energy density and cycle life of the battery cell are improved. Specifically, when the lower limit of the lithium content in the positive electrode film layer is less than 4.0% when the battery cell is discharged to 2.5V at a rate of 0.04C, the battery cell cannot have both high energy density and cycle life. When the battery cell is discharged to 2.5V at a rate of 0.04C, the upper limit of the lithium content in the positive electrode film layer is 4.3%, and in this case, if the content of the pre-lithiation agent continues to be increased, although the cycle performance is relatively good, the mass proportion of the LFP material decreases, and the energy density of the battery cell will be reduced.

In the present application, when the battery cell is discharged to 2.5V at a rate of 0.04C, a method for testing the lithium content is as follows: After the battery cell is discharged to 2.5V at a rate of 0.04C, the battery cell is disassembled, the positive electrode sheet is taken out and cleaned with a dimethyl carbonate (DMC) solvent, a positive electrode powder is scraped out after drying, and the lithium content in the positive electrode sheet may be tested with a Thermo ICAP7400 inductively coupled plasma-optical emission spectrometer (ICP-OES).

As an example, when the battery cell is discharged to 2.5V at 0.04C rate, based on the total mass of the positive electrode film layer, the lithium content is 4.0%, 4.05%, 4.1%, 4.12%, 4.15%, 4.18%, 4.2%, 4.22%, 4.3%, and the like, or may be a range composed of any of the above values.

According to some embodiments of the present application, when the battery cell is discharged to 2.5V at a rate of 0.04C, based on the total mass of the positive electrode film layer, the lithium content is 4.0% to 4.2%. Therefore, the energy density of the battery cell is improved while the cycle performance of the battery cell is improved.

According to some embodiments of the present application, when the battery cell is discharged to 2.5V at a rate of 0.04C, based on the total mass of the positive electrode film layer, the lithium content is 4.0% to 4.1%. Therefore, the energy density of the battery cell is improved while the cycle performance of the battery cell is improved.

### [Positive electrode sheet]

As an example, the positive electrode current collector has two surfaces opposed in its own thickness direction, and the positive electrode film layer is provided on either one or both of the two opposed surfaces of the positive electrode current collector.

In some implementations, the positive electrode current collector may be a metal foil or a composite current collector. For example, an aluminum foil can be used as the metal foil. The composite current collector may include a polymer material base layer and a metal layer formed on at least one surface of the polymer material base layer. The composite current collector may be formed by forming a metal material (aluminum, an aluminum alloy, nickel, a nickel alloy, titanium, a titanium alloy, silver, a silver alloy, and the like) on a base material of a polymer material such as a base material of polypropylene (PP), polyethylene terephthalate (PET), polybutylene terephthalate (PBT), polystyrene (PS), polyethylene (PE), and the like.

According to some embodiments of the present application, on a longitudinal section in a thickness direction of the positive electrode sheet, there is a first gap between the lithium iron phosphate material and the pre-lithiation agent, and the first gap is 50 nm to 500 nm. Specifically, after the lithium iron phosphate material is mixed with the pre-lithiation agent, the first gap is formed at the junction of the lithium iron phosphate material and the pre-lithiation agent, and the presence of the first gap can improve an infiltration effect of the electrolyte solution on the positive electrode sheet, and improve dynamic performance of the battery cell.

In the present application, a method for testing the first gap is to cut the positive electrode sheet in the thickness direction of the positive electrode sheet by using plasma, to obtain a cross section of the positive electrode sheet, obtain a cross-sectional view by using a scanning electron microscope (SEM observation), and after a pre-lithiation agent particle is selected, it can be observed that there is a gap at a junction between the pre-lithiation agent particle and a surrounding active particle, and then a maximum distance between an edge of the pre-lithiation agent and an edge of the lithium iron phosphate material is measured as a size of the first gap.

As an example, the first gap may be 50 nm, 100 nm, 200 nm, 300 nm, 400 nm or 500 nm, or the like, or may be a range composed of any of the above values.

According to some embodiments of the present application, on the longitudinal section along a thickness direction of the positive electrode sheet, an average value of a longest diameter of the pre-lithiation agent is a, an average value of a longest diameter of the lithium iron phosphate material is b, and a and b satisfy the following relationship: 5 µm≤a-b≤11 µm. Therefore, when the difference between a and b falls within the above range, the first gap is formed at the junction between the positive electrode active material and the pre-lithiation agent, thereby improving an infiltration effect of the electrolyte solution on the positive electrode sheet.

As an example, a-b may be 5 µ m, 6 µ m, 7 µ m, 8 µ m, 9 µ m, 10 µ m, 11 µ m, or the like, or may be a range composed of any of the above values.

The longest diameters of the pre-lithiation agent and the lithium iron phosphate material in the present application are defined as follows:
The positive electrode sheet including the pre-lithiation agent particles and the lithium iron phosphate material is cut in a thickness direction of the electrode sheet to expose the longitudinal section of the positive electrode film layer, and a scanning electron microscope (SEM) test is performed on the longitudinal section of the positive electrode film layer to determine the longest diameters of the pre-lithiation agent and the lithium iron phosphate material. Specifically, the longest diameter of the pre-lithiation agent is the longest straight line that passes through the center point of the pre-lithiation agent and extends to the outer circumference of the particle. The longest diameter of the lithium iron phosphate material is the longest straight line that passes through the center point of the lithium iron phosphate material and extends to the outer circumference of the particle.

In the present application, a method for calculating the average value of the longest diameters of the pre-lithiation agent and the lithium iron phosphate material is as follows:
30 pre-lithiation agent particles are randomly selected from the longitudinal section view of the positive electrode film layer, and the longest diameters of the 30 pre-lithiation agent particles are respectively measured and then averaged; and 30 lithium iron phosphate material particles are randomly selected from the longitudinal section view of the positive electrode film layer, and the longest diameters of the 30 lithium iron phosphate material particles are respectively measured and averaged.

According to some embodiments of the present application, the average value of the longest diameter of the lithium iron phosphate material may be 1 µm to 2 µm, for example, may be 1 µm, 1.2 µm, 1.4 µm, 1.6 µm, 1.8 µm or 2 µm, or the like, or may be a range composed of any of the above values. Therefore, the particle size of the positive electrode active material is reduced, the deintercalation rate of lithium ions in the positive electrode active material is increased, and the conductivity of the positive electrode active material is improved.

According to some embodiments of the present application, the average value of the longest diameter of the pre-lithiation agent may be 7 µm to 12 µm, for example, may be 7 µm, 7.5 µm, 8 µm, 8.5 µm, 9 µm, 9.5 µm, 10 µm, 10.5 µm, 11 µm, 11.5 µm or 12 µm or the like, or may be a range composed of any of the above values. Therefore, the particle size of the pre-lithiation agent is increased, the specific surface area of the pre-lithiation agent is reduced, the quantity of active sites on the surface of the pre-lithiation agent is reduced, side reactions between the pre-lithiation agent and the electrolyte solution are reduced, the stability of the electrolyte solution under a high-voltage condition is improved, and the service life of the battery cell is prolonged.

According to some embodiments of the present application, the lithium iron phosphate material includes a lithium iron phosphate material of an olivine structure. Therefore, the structure of the positive active material is relatively stable, the probability that the positive active material collapses in a cycle process of the battery cell can be reduced, and the stability and safety of the battery cell can be improved.

According to some embodiments of this application, the pre-lithiation agent comprises a matrix, the matrix includes LiₓN_{y}O_{z}, 1≤x≤6, 1≤y≤6, 2≤z≤12, and N includes one or more of a Na element, a Ni element, a Co element, a Mn element, a Al element, and a Fe element. Therefore, decomposition of the pre-lithiation agent can compensate for the active lithium ions consumed by forming the SEI film, thereby improving the initial efficiency and the energy density of the battery cell.

As an example, x may be 1, 2, 3, 4, 5 or 6, or the like, or may be a range composed of any of the above values.

As an example, y may be 1, 2, 3, 4, 5 or 6, or the like, or may be a range composed of any of the above values.

As an example, z may be 2, 3, 4, 5, 6, 7, 8, 9, 10, 11 or 12, or the like, or may be a range composed of any of the above values.

According to some embodiments of the present application, the pre-lithiation agent includes one or two of Li₂NiO₂ and Li₅FeO₄. Therefore, the lithium replenishment effect is improved.

According to some embodiments of the present application, when lithium in the pre-lithiation agent is completely deintercalated or partially deintercalated, the pre-lithiation agent includes one or both of Liₙ NiOₘ and LiₑFeO_{f}, where 0<m≤2, 0≤n≤2, 0≤e≤5, and 0<f≤4.

As an example, m may be 0.5, 1, 1.5 or 2, or the like, or may be a range composed of any of the above values.

As an example, n may be 0, 0.5, 1, 1.5 or 2, or the like, or may be a range composed of any of the above values.

As an example, e may be 0, 1, 2, 3, 4 or 5 or the like, or may be a range composed of any of the above values.

As an example, f may be 1, 2, 3 or 4 or the like, or may be a range composed of any of the above values.

According to some embodiments of the present application, when lithium in the pre-lithiation agent is completely deintercalated, the pre-lithiation agent includes one or both of NiOₘ and LiₚFeO_{q}, where 0<m≤2, 0≤p≤1, 0<q≤2.

As an example, m may be 0.5, 1, 1.5 or 2, or the like, or may be a range composed of any of the above values.

As an example, p may be 0, 0.2, 0.4, 0.6, 0.8 or 1, or the like, or may be a range composed of any of the above values.

As an example, q may be 0.5, 1, 1.5 or 2, or the like, or may be a range composed of any of the above values.

According to some embodiments of the present application, when the pre-lithiation agent in the positive electrode film layer is incompletely decomposed, the molar content of the Li element in the pre-lithiation agent is greater than the molar content of the Li element in the lithium iron phosphate material.

According to some embodiments of the present application, at least part of a surface of the matrix has a coating layer, and the coating layer includes one or more of a C element, a Al element, a Zr element, a P element, an S element, an Si element, and a B element. Therefore, the coating layer can reduce the probability of direct contact between the matrix and air, reduce the probability of reaction between the matrix and water and carbon dioxide in the air, improve the air stability of the matrix, reduce the generation of lithium on the surface of the matrix, improve the conductivity of the matrix, and improve the utilization rate of active lithium ions.

In some embodiments of the present application, a thickness of the coating layer is 10 nm to 200 nm. For example, the thickness may be 10 nm, 50 nm, 100 nm, 150 nm or 200 nm or the like, or may be a range composed of any of the above values. Therefore, the probability that the active lithium ions are deintercalated due to the excessive thickness of the coating layer is reduced, the decomposition efficiency of the matrix is improved, and the lithium supplement effect is improved.

In the present application, the method for testing the thickness of the coating layer is to cut the positive electrode sheet including the pre-lithiation agent particle and the lithium iron phosphate material in the thickness direction of the electrode sheet to expose the longitudinal section of the positive electrode film layer. By performing a SEM test on the longitudinal section of the positive electrode film layer, after the pre-lithiation agent particles are selected, it can be observed that the pre-lithiation agent particle is of a core-shell structure, and the thickness of the shell layer is measured as the thickness of the coating layer.

According to some embodiments of the present application, after the pre-lithiation agent is delithiated, the crystal lattice contracts, a second gap is formed between the matrix and the coating layer, and the second gap may be 5 nm to 50 nm. For example, the second gap may be 5 nm, 10 nm, 20 nm, 30 nm, 40 nm or 50 nm, or the like, or may be a range composed of any of the above values. Therefore, the liquid retention capacity of the positive electrode sheet is improved, the transmission efficiency of active lithium ions is improved, and the internal resistance of the battery is reduced.

In the present application, the method for testing the second gap is to cut the positive electrode sheet including the pre-lithiation agent particle and the lithium iron phosphate material in the thickness direction of the electrode sheet to expose the longitudinal section of the positive electrode film layer. By performing a SEM test on the longitudinal section of the positive electrode film layer, after the pre-lithiation agent is decomposed, it can be observed that there is a gap between the matrix of the pre-lithiation agent particles and the coating layer in the longitudinal section, and the maximum distance between the edge of the matrix of the pre-lithiation agent and the inner edge of the coating layer is measured as the size of the second gap. The presence of the second gap helps the electrolyte solution fully contact the pre-lithiation agent matrix in a cycle process, and helps the pre-lithiation agent fully release lithium ions.

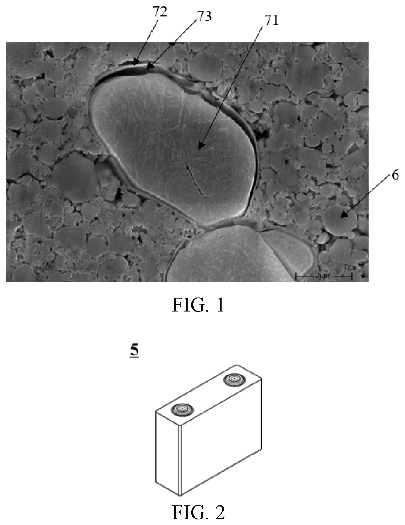

Referring to FIG. 1, FIG. 1 is an SEM image of a longitudinal section of a positive electrode sheet including lithium iron phosphate particles 6 and pre-lithiation agent particles, the pre-lithiation agent particles are Li₅ FeO₄, and it can be seen from FIG. 1 that there is a second gap 73 between a pre-lithiation agent matrix 71 and a pre-lithiation agent coating layer 72.

According to some embodiments of this application, the matrix includes a doping element, and the doping element includes one or more of a Al element, a Mn element, a Ti element, a Ni element, a Si element, a B element, an S element, and a P element. Therefore, the doping element can improve the structural stability of the matrix, reduce the probability that the structure of the matrix is destroyed due to the deintercalation of lithium ions, thereby generating grain boundary cracks, reduce the side reaction between the matrix and the electrolyte solution, and reduce the dissolution of the N element in the matrix.

According to some embodiments of the present application, based on the total mass of the matrix, the mass proportion of the doping element may be 0.01% to 0.2%. For example, the mass proportion may be 0.01%, 0.05%, 0.1%, 0.15% or 0.2%, or the like, or may be a range composed of any of the above values. This increases the structural stability of the matrix.

According to some embodiments of the present application, N includes a Fe element, and a molar ratio of a Fe atom to an O atom in the pre-lithiation agent is 1: (2-2.5). Specifically, the pre-lithiation agent decomposes to generate oxygen, and the molar ratio of Fe atoms to O atoms in the pre-lithiation agent varies with the degree of decomposition. Therefore, after the pre-lithiation agent decomposes and releases oxygen, when the internal pressure or temperature of the battery is excessively high, the explosion-proof valve may be opened through oxygen, thereby improving the safety of the battery.

According to some embodiments of the present application, the positive electrode film layer further includes a conductive agent. Therefore, the conductivity of the positive electrode film layer is improved.

As an example, the conductive agent may include at least one or more of superconducting carbon, acetylene black, carbon black, ketjen black, a carbon dot, a carbon nanotube, graphene, and a carbon nanofiber.

In some embodiments, the positive electrode film layer optionally further includes a binder. As an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylate resin.

### [Negative electrode sheet]

The negative electrode sheet includes a negative electrode current collector and a negative electrode film layer disposed on at least one surface of the negative electrode current collector, the negative electrode film layer including a negative electrode active material.

As an example, the negative electrode current collector has two surfaces opposite in its own thickness direction, and the negative electrode film layer is disposed on either one or both of the two opposite surfaces of the negative electrode current collector.

In some implementations, the negative electrode current collector may use a metal foil or a composite current collector. For example, a copper foil may be used as the metal foil. The composite current collector may include a polymer material base layer and a metal layer formed on at least one surface of a polymer material substrate. The composite current collector may be formed by forming a metal material (copper, a copper alloy, nickel, a nickel alloy, titanium, a titanium alloy, silver, a silver alloy, or the like) on the polymer material substrate (e.g., a substrate of polypropylene (PP), polyethylene terephthalate (PET), polybutylene terephthalate (PBT), polystyrene (PS), or polyethylene (PE)).

In some implementations, the negative electrode film layer optionally further includes a binder. The binder may be selected from at least one of styrene-butadiene rubber (SBR), polyacrylic acid (PAA), sodium polyacrylate (PAAS), polyacrylamide (PAM), polyvinyl alcohol (PVA), sodium alginate (SA), poly(methyl acrylic acid) (PMAA), and carboxymethyl chitosan (CMCS).

In some implementations, the negative electrode film layer further optionally includes a conductive agent. The conductive agent may be selected from at least one of superconducting carbon, acetylene black, carbon black, Ketjen black, carbon dots, carbon nanotubes, graphene, and carbon nanofibers.

In some embodiments, the negative electrode film layer further optionally includes another auxiliary agent, for example, a thickening agent (e.g., sodium carboxymethyl cellulose (CMC-Na)).

In some embodiments, the negative electrode sheet may be prepared by the following method: the above components for preparing the negative electrode sheet, e.g., the negative electrode active material, the conductive agent, the binder, or any other components, are dispersed in a solvent (e.g., deionized water) to form a negative electrode slurry; then, the negative electrode slurry is coated on the negative electrode current collector. After processes such as drying and cold pressing, the negative electrode sheet can be obtained.

### [Electrolyte]

The electrolyte functions to conduct ions between the positive electrode sheet and the negative electrode sheet. The type of the electrolyte is not specifically limited in the present application, and may be selected according to a requirement.

In some implementations, the electrolyte uses an electrolyte solution. The electrolyte solution includes a solvent, an electrolyte salt, and an additive, the molar concentration of the electrolyte salt in the electrolyte solution is 1.1 mol/L to 1.5 mol/L, the additive includes one or more of a phosphorus-containing additive, a fluorine-containing additive, and a sulfur-containing additive, and the solvent includes a cyclic carbonate and a linear carbonate.

According to some embodiments of the present application, the molar concentration of the electrolyte salt in the electrolyte solution may be 1.1 mol/L to 1.5 mol/L, for example, may be 1.1 mol/L, 1.2 mol/L, 1.3 mol/L, 1.4 mol/L, 1.5 mol/L, or the like, or may be a range composed of any of the above values.

In some implementations, the electrolyte salt may include at least one of lithium hexafluorophosphate, lithium tetrafluoroborate, lithium perchlorate, lithium hexafluoroarsenate, lithium bisfluorosulfonylimide, lithium bistrifluoromethanesulfonylimide, lithium trifluoromethanesulfonate, lithium difluorophosphate, lithium difluorooxalatoborate, lithium dioxalatoborate, lithium difluorodioxalatophosphate, and lithium tetrafluorooxalatophosphate.

According to some embodiments of the present application, the additive includes one or more of a phosphorus-containing additive, a fluorine-containing additive, and a sulfur-containing additive, and based on the total mass of the electrolyte solution, the sum of the mass of the phosphorus-containing additive, the fluorine-containing additive, and the sulfur-containing additive may be 0.2% to 2%, for example, may be 0.2%, 0.4%, 0.6%, 0.8%, 1%, 1.2%, 1.4%, 1.6%, 1.8% or 2%, or the like, or may be a range composed of any of the above values.

According to some embodiments of the present application, the phosphorus-containing additive includes one or more of lithium difluorophosphate (LiDFP), tris (trimethylsilyl) phosphate (TMSP), triphenylphosphine oxide (TPPO), triethyl phosphate (TEP), trimethylolpropane (TMP), and ethylene trifluoroethyl phosphate (TFEOP).

In some embodiments of the present application, the fluorine-containing additive includes one or more of fluoroethylene carbonate (FEC), difluoroethylene carbonate (DFEC), and perfluoroalkyl ethylene carbonate.

According to some embodiments of the present application, the electrolyte solution further includes a boron-containing additive, where the boron-containing additive includes one or more of tris (trimethylsilyl) borate (TMSB), lithium tetrafluoroborate (LiBF₄), lithium bis(oxalate) borate (LiBOB), and lithium difluoro (oxalate) borate (LiDFOB).

According to some embodiments of the present application, the sulfur-containing additive includes one or more of ethylene sulfite (ES), propylene sulfite (PS), ethylene sulfate (DTD), 4-methyl ethylene sulfate (PCS), and 1, 3-propene sultone (PST).

According to some embodiments of the present application, the additive further includes a carbonate-based additive.

According to some embodiments of the present application, the carbonate-based additive includes vinylene carbonate (VC).

According to some embodiments of the present application, the solvent includes a cyclic carbonate and a linear carbonate, and based on the total mass of the electrolyte solution, a mass proportion of the cyclic carbonate is 15% to 25%, and a mass proportion of the linear carbonate is 50% to 70%. Therefore, the stability of the electrolyte solution is improved.

According to some embodiments of the present application, the cyclic carbonate includes at least one of ethylene carbonate (EC) or propylene carbonate.

According to some embodiments of the present application, the linear carbonate includes at least one of dimethyl carbonate (DMC), ethyl methyl carbonate (EMC), and diethyl carbonate.

### [Separator]

According to some embodiments of the present application, the separator includes: a base film, where a material of the base film includes polyethylene; an adhesive layer, located on at least one side of the base film; and a ceramic layer, located on a side of the adhesive layer away from the base film. Therefore, the adhesive layer can reduce the probability that the base film is wrinkled, and the ceramic layer can reduce the risk that the separator is punctured, thereby improving the safety of the battery.

According to some embodiments of the present application, the separator is arranged between the positive electrode sheet and the negative electrode sheet, and the ceramic layer is close to the positive electrode sheet. Therefore, the probability that the base film is oxidized under a high pressure condition may be reduced.

### [Battery cell]

In some implementations, the battery may comprise an outer package. The outer package may be used to package the above electrode assembly and electrolyte.

According to some embodiments of the present application, when the battery cell is charged to 4.5V at a rate of 0.05C, gas is generated in the battery cell, where the gas includes oxygen, and based on the total mass of the gas, the mass proportion of the oxygen is 30% to 80%. Therefore, when the battery is overcharged, the pre-lithiation agent decomposes to generate a large amount of oxygen, and the oxygen can push open the explosion-proof valve, thereby improving the safety of the battery cell.

As an example, the oxygen content may be 30%, 40%, 50%, 60%, 70% or 80%, or the like, or may be a range composed of any of the above values.

In the present application, a method for testing the oxygen content is to excavate a liquid injection hole of the battery cell, collect the gas generated by 4.5V overcharge through an external gas pipe, and the oxygen content in the gas can be measured by using a JJG 700-1999 gas chromatograph.

In some implementations, the outer package of the battery may be a hard casing, for example, a hard plastic casing, an aluminum casing, or a steel casing. The outer package of the battery may also be a pouch, such as a bag-type pouch. The material of the pouch may be plastic, and examples of the plastic include polypropylene, polybutylene terephthalate, and polybutylene succinate.

The shape of the battery is not particularly limited in the present application, and may be a cylindrical shape, a square shape, or any other shape. For example, FIG. 2 shows a battery cell 5 with a square structure as an example.

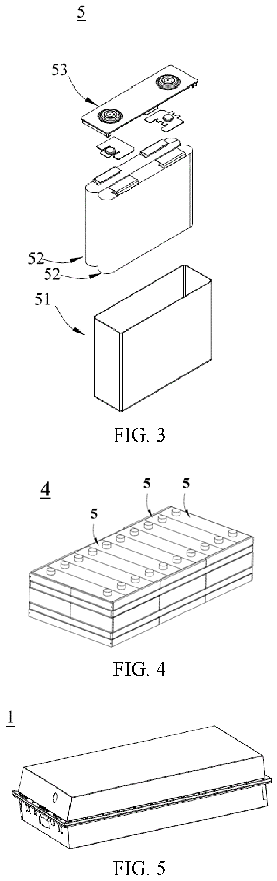

In some implementations, referring to FIG. 3, the outer package may include a housing 51 and a cover plate 53. The housing 51 may include a bottom plate and side plates connected to the bottom plate, and the bottom plate and the side plates define an accommodating cavity. The housing 51 has an opening communicating with the accommodating cavity, and the cover plate 53 can cover the opening to close the accommodating cavity. The positive electrode sheet, the negative electrode sheet, and the separator may be formed into an electrode assembly 52 through a winding process or a lamination process. The electrode assembly 52 is packaged within the accommodating cavity. The electrolyte solution is impregnated into the electrode assembly 52. There may be one or a plurality of electrode assemblies 52 included in the battery cell 5, and those skilled in the art may perform selection according to specific actual requirements.

In some implementations, the battery may be assembled into a battery module, there may be one or a plurality of batteries included in the battery module, and the specific number may be selected by those skilled in the art according to the application and capacity of the battery module.

FIG. 4 shows a battery module 4 as an example. Referring to FIG. 4, in the battery module 4, a plurality of battery cells 5 may be arranged sequentially in the length direction of the battery module 4. Certainly, the battery cells may alternatively be arranged in any other manner. Further, the plurality of battery cells 5 may be fastened by using fasteners.

Optionally, the battery module 4 may further include a casing having an accommodating space in which the plurality of battery cells 5 are accommodated.

In some implementations, the battery modules may be further assembled into a battery pack, and there may be one or a plurality of battery modules included in the battery pack, and the specific number may be selected by those skilled in the art according to the application and capacity of the battery pack.

A second aspect of the present application provides a battery apparatus, including the battery cell provided in the first aspect of the present application.

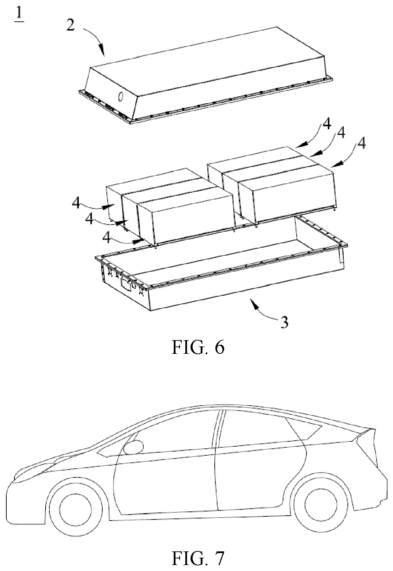

FIG. 5 and FIG. 6 show a battery pack 1 as an example. Referring to FIG. 5 and FIG. 6, a battery case and a plurality of battery modules 4 arranged in the battery case may be included in the battery pack 1. The battery case includes an upper case 2 and a lower case 3, the upper case 2 being capable of covering the lower case 3 and forming a closed space for accommodating the battery modules 4. The plurality of battery modules 4 may be arranged in any manner in the battery case.

In addition, the present application further provides an electric device, including at least one of the battery cell, the battery module, or the battery pack provided in the present application, where the battery cell, the battery module, and the battery pack are configured to provide electric energy. The battery, the battery module, or the battery pack may be used as a power supply of the electric device, or may be used as an energy storage unit of the electric device. The electric device may comprise a mobile device (e.g., a mobile phone, a notebook computer, etc.), an electric vehicle (e.g., a pure electric vehicle, a hybrid electric vehicle, a plug-in hybrid electric vehicle, an electric bicycle, an electric scooter, an electric golf cart, an electric truck, etc.), an electric train, a ship, a satellite, an energy storage system, and the like, but is not limited thereto.

As the electric device, the battery cell, the battery module, or the battery pack may be selected according to the use requirements thereof.

FIG. 7 shows an electric device as an example. The electric device is a pure electric vehicle, a hybrid electric vehicle, a plug-in hybrid electric vehicle, or the like. In order to meet the demand for high power and high energy density of a battery by the electric device, a battery pack or a battery module may be used.

In another example, the electrical apparatus may be a cell phone, a tablet computer, a notebook computer, or the like. This apparatus is generally required to be thin and lightweight, and may use a battery as a power supply.

In order to make the technical problems, technical solutions, and advantageous effects solved by the embodiments of the present application clearer, the following will be further described in detail with reference to the embodiments and the accompanying drawings. Apparently, the described embodiments are only a part of the embodiments of the present application, and not all of the embodiments. The following description of at least one exemplary embodiment is merely illustrative in nature and is in no way intended as any limitation on the present application and its applications. All other embodiments obtained by those of ordinary skill in the art based on the embodiments of the present application without making creative efforts shall fall within the protection scope of the present application.

### Example 1

### 1. Positive electrode sheet

The positive electrode sheet includes a positive electrode current collector aluminum foil, positive electrode film layers are provided on two surfaces of the aluminum foil, the thickness of the positive electrode film layer on the single side is 100 µm and the compaction density is 2.4 g/cm³, the coating weight of the positive electrode film layer on the single side is 24 mg/cm², and based on the total mass of the positive electrode film layer on the single side, the positive electrode film layer includes 95.3% of a lithium iron phosphate material, 1.9% of a pre-lithiation agent Li₅FeO₄ (the surface is coated with a carbon material, the thickness is about 100 nm, and based on the total mass of the pre-lithiation agent, the mass proportion of the coating layer is 2.5%, 1% of a conductive agent carbon black, and 1.8% of a binder polyvinylidene fluoride PVDF.

### 2. Negative electrode sheet

The negative electrode sheet includes a negative electrode current collector copper foil, negative electrode film layers are provided on two surfaces of the copper foil, the thickness of the negative electrode film layer on the single side is 57 µm and the compaction density is 1.44 g/cm³, and the coating weight of the negative electrode film layer on the single side is 8.2 mg/cm², and based on the total mass of the negative electrode film layer on the single side, the negative electrode film layer includes 97.2% of artificial graphite (graphitization degree of 94%), 0.8% of a conductive agent of carbon black, 0.8% of a binder of styrene-butadiene rubber (SBR) and 1.2% of a thickener sodium carboxymethyl cellulose (CMC-Na) by mass respectively.

### 3. Electrolyte solution

The electrolyte solution includes a solvent, an electrolyte salt, and an additive, where the solvent includes EC, DMC, and EMC, the mass ratio of EC, DMC, and EMC is 31:32:37, the electrolyte salt is LiPF₆, the molar concentration of LiPF₆ is 1.2 mol/L, the additive includes LiDFP, FEC, LIDFOB, LiBF₄, PS, and VC, and based on the total mass of the electrolyte solution, the mass proportion of LiDFP is 0.039%, the mass proportion of FEC is 0.23%, the mass proportion of LIDFOB is 0.0246%, the mass proportion of LiBF₄ is 0.0091%, the mass proportion of PS is 0.54%, and a mass proportion of VC is 3.34%.

### 4. Separator

Polyethylene film.

### 5. Battery cell

A battery cell includes a positive electrode sheet, a separator, a negative electrode sheet, and an electrolyte solution.

### Performance tests:

### 1. Energy density

At 25°C, a lithium ion battery was charged to 3.65V at a constant current of 1/3C, then charged at a constant voltage of 3.65V to a current of 0.05C, and left for 5 min, and then discharged to 2.5V at 1/3C, and a discharge capacity was recorded as C; after the size of the battery cell was measured, a volume thereof was calculated as V, and a volumetric energy density thereof could be obtained as 3.22×C/V.

### 2. Cyclic capacity retention rate at 45°C

At 45°C, the lithium ion battery was charged to 3.65V at a constant current of 1/3C, then charged at a constant voltage of 3.65V to a current of 0.05C, and left for 5 min, and then discharged to 2.5V at 1/3C, and a discharge capacity C₀ was recorded; (2) The lithium ion battery was then charged to 2.5V at a constant current of 1.0C, left for 5 min, and then discharged to 3.65V at 1/3C, and a discharge capacity C₁ was recorded. The above step (2) was repeated 300 times, and the discharge capacity C₃₀₀ of the lithium ion battery after the 300^{th} cycle was recorded, where a capacity retention rate P₃₀₀ =C₃₀₀/C₀×100%.

### 3. Method for testing lithium content of positive electrode film layer

After the battery cell is discharged to 2.5V at a rate of 0.04C, the battery cell is disassembled, the positive electrode sheet is taken out and cleaned with a dimethyl carbonate (DMC) solvent, a positive electrode powder is scraped out after drying, and the lithium content in the positive electrode sheet may be tested with a Thermo ICAP7400 inductively coupled plasma-optical emission spectrometer (ICP-OES).

### Example 2 to Example 5

The negative electrode sheet and the electrolyte solution in the battery cell were the same as those in Example 1, except that the content of the pre-lithiation agent in the positive electrode film layer was different.

### Comparative Example 1

The negative electrode sheet and the electrolyte solution in the battery cell were the same as those in Example 1, except that the positive electrode film layer did not contain a pre-lithiation agent.

### Example 6

The negative electrode sheet and the electrolyte solution in the battery cell were the same as those in Example 1, except that the types of the pre-lithiation agents in the positive electrode film layer were different.

Differences in Examples 1 to 6 and Comparative Example 1 are shown in Table 1.

**Table 1**

| | **Positive electrode sheet** | | | | **Battery cell** | | |
|---|---|---|---|---|---|---|---|
| | **Lithium iron phosphate** | **Pre-lithiation agent** | | | **When the battery was discharged to 2.5 V at a rate of 0.04C, based on the total mass of the positive electrode film layer, the lithium content (%)** | **Energy density (Wh/L)** | **Cyclic capacity retention rate at 45°C @300cls** |
| | **Mass proportion (%) in positive electrode film layer** | **Type** | **Addition amount of pre-lithiation agent in positive electrode (%)** | **Pitch of first gap (nm)** | | | |
| **Comparative Example 1** | 97.2 | / | / | / | 3.89 | 422 | 92.5% |
| **Example 1** | 95.3 | Li₅CO₄ | 1.9 | 315 | 4.09 | 427 | 95.6% |
| **Example 2** | 96.2 | Li₅CO₄ | 1.5 | 300 | 4.05 | 431 | 93.0% |
| **Example 3** | 94.7 | Li₅CO₄ | 2.5 | 340 | 4.18 | 420 | 97.3% |
| **Example 4** | 93.7 | Li₅CO₄ | 3.5 | 340 | 4.30 | 415 | 98.0% |
| **Example 5** | 93.2 | Li₅CO₄ | 4 | 340 | 4.28 | 410 | 98.5% |
| **Example 6** | 95.3 | Li₂NiO₂ | 1.9 | 290 | 4.07 | 425 | 93.8% |

It can be learned from Example 1 to Example 5 that the battery cell provided in the present application has both a relatively high energy density and a relatively high cyclic capacity retention rate, which indicates that in the present application, different masses of pre-lithiation agents are added to the positive electrode film layer, so that the lithium content in the positive electrode film layer can be adjusted, thereby improving the cycle life and the energy density of the battery cell.

It can be learned from comparison between Example 1, Example 2, and Comparative Example 1 that when the positive electrode film layer does not contain the pre-lithiation agent, both the energy density and the cyclic capacity retention rate of the battery cell are relatively low; when the lithium content in the positive electrode film layer is 1.5% to 1.9%, compared with a case in which the pre-lithiation agent is not added to the positive electrode film layer, both the energy density and the cycle performance of the battery cell can be improved.

It can be seen from the comparison of Examples 3-5 and Comparative Example 1 that with the gradual increase of the lithium content in the positive electrode film layer, the energy density of the battery cell is slightly reduced, and the cycle performance is gradually improved. Because a corresponding mass proportion of the lithium iron phosphate material gradually decreases as the content of the pre-lithiation agent in the positive electrode film layer gradually increases, the energy density of the battery cell slightly decreases, but a battery cell having an energy density greater than or equal to 410 Wh/L and a cyclic capacity retention rate greater than or equal to 97.3% can still be obtained.

It can be learned from Example 1 to Example 3 that when the lithium content in the positive electrode film layer is 4.0% to 4.2%, the energy density of the battery cell is greater than or equal to 420 Wh/L, and the cyclic capacity retention rate is greater than or equal to 93%, which indicates that when the content of the pre-lithiation agent in the positive electrode film layer is 1.5% to 2.5%, a battery cell having both relatively high energy density and cycle performance can be obtained.

It can be learned from Example 1 and Example 6 that different types of pre-lithiation agents may be selected, and the lithium content in the positive electrode film layer is controlled by adjusting the addition amount of the pre-lithiation agent, to obtain a battery cell with both good cycle performance and energy density.

### Example 7, Example 8

The negative electrode sheet and the electrolyte solution in the battery cell were the same as those in Example 1, except that the particle size of the lithium iron phosphate is different.

### Example 9, Example 10

The negative electrode sheet and the electrolyte solution in the battery cell were the same as those in Example 1, except that the particle size of the pre-lithiation agent is different.

### Example 11, Example 12

A negative electrode sheet and an electrolyte solution in a battery cell are the same as those in Embodiment 1, and a difference lies in that thicknesses of coating layers on surfaces of pre-lithiation agents are different.

The differences in Example 7 to Example 12 are shown in Table 2.

**Table 2**

| | **Positive electrode sheet** | | | | | **Battery cell** | | |
|---|---|---|---|---|---|---|---|---|
| | **Lithium iron phosphate** | **Pre-lithiation agent** | | | | **When the battery was discharged to 2.5 V at a rate of 0.04C, based on the total mass of the positive electrode film layer, the lithium content (%)** | **Energy density (Wh/L)** | **Cyclic capacity retention rate at 45°C *@*300cls** |
| | **Average value b of longest diameter (µm)** | **Thickness of coating layer (nm)** | **The average value of the longest diameter of the pre-lithiation agent is a (µm)** | **Addition amount of pre-lithiation agent in positive electrode (%)** | **Pitch of first gap (nm)** | | | |
| **Example 1** | 1.5 | 100 | 9 | 1.9 | 315 | 4.09 | 427 | 95.6% |
| **Example 7** | 1 | 100 | 9 | 1.9 | 360 | 4.11 | 428 | 95.8% |
| **Example 8** | 2 | 100 | 9 | 1.9 | 405 | 4.08 | 426 | 96.0% |
| **Example 9** | 1.5 | 100 | 7 | 1.9 | 270 | 4.09 | 427 | 96.2% |
| **Example 10** | 1.5 | 100 | 12 | 1.9 | 345 | 4.06 | 426 | 95.3% |
| **Example 11** | 1.5 | 10 | 9 | 1.9 | 130 | 4.08 | 425 | 94.5% |
| **Example 12** | 1.5 | 200 | 9 | 1.9 | 425 | 4.05 | 424 | 95.4% |

It can be learned from Example 7 to Example 10 that when the lithium content in the positive electrode film layer is within an appropriate range, battery cells with relatively high energy density and cycle performance can be obtained by using positive active materials and pre-lithiation agents with different particle sizes. On this basis, the rate of lithium deintercalation can be increased by adjusting the particle size of the positive electrode active material, and the conductivity of the positive electrode active material can be improved; the specific surface area of the pre-lithiation agent may be reduced by adjusting the particle size of the pre-lithiation agent, to reduce the side reaction between the pre-lithiation agent and the electrolyte solution.

It can be seen from Example 11 and Example 12 that the surface of the pre-lithiation agent may further have carbon coating layers of different thicknesses, and the deintercalation rate of lithium ions can be increased and the lithium replenishment effect can be improved by adjusting the thickness of the coating layer.

Finally, it should be noted that: the above embodiments are only used to illustrate the technical solutions of the present application, but not to limit them. Although the present application has been described in detail with reference to the foregoing embodiments, those of ordinary skill in the art should understand that: they can still make modifications on the technical solutions described in the aforementioned embodiments or make equivalent replacements on some or all of the technical features; and these modifications or replacements do not make the essence of the corresponding technical solutions depart from the spirit and scope of the technical solutions of the various embodiments of the present application. All such modifications and replacements should fall within the scope of the claims and specification of the present application. In particular, the technical features mentioned in the embodiments may be combined in any manner provided that no structural conflict is present. The present application is not limited to the specific embodiments disclosed herein, but includes all technical solutions falling within the scope of the claims.

## Claims

1. A battery cell, comprising:
a positive electrode sheet, wherein the positive electrode sheet comprises a positive electrode current collector and a positive electrode film layer located on at least one side of the positive electrode current collector, the positive electrode film layer comprises a lithium iron phosphate material and a pre-lithiation agent, and when the battery cell is discharged to 2.5 V at a rate of 0.04C, based on a total mass of the positive electrode film layer, a content of lithium is 4.0% to 4.3%;
a negative electrode sheet, wherein the negative electrode sheet comprises a negative electrode current collector and a negative electrode film layer located on at least one side of the negative electrode current collector, the negative electrode film layer comprises a negative electrode active material, and the negative electrode active material comprises graphite; and
a separator, wherein the separator is located between the positive electrode sheet and the negative electrode sheet.

2. The battery cell according to claim 1, wherein when the battery cell is discharged to 2.5 V at a rate of 0.04C, based on the total mass of the positive electrode film layer, the content of lithium is 4.0% to 4.2%.

3. The battery cell according to claim 1 or 2, wherein when the battery cell is discharged to 2.5 V at a rate of 0.04C, based on the total mass of the positive electrode film layer, the content of lithium is 4.0% to 4.1%.

4. The battery cell according to any one of claims 1 to 3, wherein on a longitudinal section in a thickness direction of the positive electrode sheet, there is a first gap between the lithium iron phosphate material and the pre-lithiation agent, and the first gap is 50 nm to 500 nm.

5. The battery cell according to any one of claims 1 to 4, wherein the positive electrode film layer at least comprises the pre-lithiation agent and the lithium iron phosphate material below:
on the longitudinal section along a thickness direction of the positive electrode sheet, an average value of a longest diameter of the pre-lithiation agent is a, an average value of a longest diameter of the lithium iron phosphate material is b, and a and b satisfy the following relationship: 5 µm≤a-b≤11 µm.

6. The battery cell according to claim 5, wherein 1 µm≤b≤2 µm and 7 µm≤a≤12 µm.

7. The battery cell according to any one of claims 1 to 6, wherein the pre-lithiation agent comprises a matrix, the matrix comprises LiₓN_{y}O_{z}, 1≤x≤6, 1≤y≤6, 2≤z≤12, and N comprises one or more of a Na element, a Ni element, a Co element, a Mn element, a Al element, and a Fe element.

8. The battery cell according to any one of claims 1 to 6, wherein the pre-lithiation agent comprises a matrix, and the matrix comprises one or two of Li₂NiO₂ and Li₅FeO₄.

9. The battery cell according to any one of claims 1 to 6, wherein the pre-lithiation agent comprises a matrix, and the matrix comprises one or two of LiₙNiOₘ and LiₑFeO_{f}, wherein 0<m≤2, 0≤n≤2, 0≤e≤5, and 0<f≤4.

10. The battery cell according to any one of claims 1 to 6, wherein the pre-lithiation agent comprises a matrix, and the matrix comprises one or both of NiOₘ and LiₚFeO_{q}, wherein 0<m≤2, 0≤p≤1, and 0<q≤2.

11. The battery cell according to any one of claims 1 to 10, wherein a molar content of the Li element in the pre-lithiation agent is greater than a molar content of the Li element in the lithium iron phosphate material.

12. The battery cell according to any one of claims 7 to 11, wherein at least part of a surface of the matrix has a coating layer, and the coating layer comprises one or more of a C element, a Al element, a Zr element, a P element, an S element, an Si element, and a B element.

13. The battery cell according to claim 12, wherein a thickness of the second coating layer is 10 nm to 200 nm.

14. The battery cell according to claim 12 or 13, wherein there is a second gap between the matrix and the coating layer, and the second gap is 5 nm to 50 nm.

15. The battery cell according to any one of claims 12 to 14, wherein the matrix comprises a doping element, and the doping element comprises one or more of a Al element, a Mn element, a Ti element, a Ni element, a Si element, a B element, an S element, and a P element.

16. The battery cell according to claim 15, wherein based on a total mass of the matrix, a mass proportion of the doping element is 0.01% to 0.2%.

17. The battery cell according to claim 7, wherein N comprises a Fe element, and a molar ratio of a Fe atom to an O atom in the pre-lithiation agent is 1: (2-2.5).

18. The battery cell according to any one of claims 1 to 17, wherein the positive electrode film layer further comprises a conductive agent, and the conductive agent comprises one or more of superconducting carbon, acetylene black, carbon black, Ketjen black, a carbon dot, a carbon nanotube, graphene, and a carbon nanofiber.

19. The battery cell according to any one of claims 1 to 18, wherein when the battery cell is charged to 4.5 V at a rate of 0.05C, gas is generated in the battery cell, the gas comprises oxygen, and based on a total mass of the gas, a mass proportion of the oxygen is 30% to 80%.

20. The battery cell according to any one of claims 1 to 19, further comprising: an electrolyte solution, wherein the electrolyte solution comprises a solvent, an electrolyte salt, and an additive, a molar concentration of the electrolyte salt in the electrolyte solution is 1.1 mol/L to 1.5 mol/L, the additive comprises one or more of a phosphorus-containing additive, a fluorine-containing additive, and a sulfur-containing additive, and the solvent comprises a cyclic carbonate and a linear carbonate.

21. A battery apparatus, comprising the battery cell according to any one of claims 1 to 20.

22. An electric device, comprising the battery cell according to any one of claims 1 to 20, wherein the battery cell is configured to provide electric energy.
